# EUROPEAN PATENT SPECIFICATION

(11) **EP 3 859 131 B1**
(45) Date of publication and mention of the grant of the patent: **10.01.2024**
(21) Application number: 18935113.3
(22) Date of filing: 30.11.2018
(51) Int. Cl.: F01N 11/00, F01N 13/00, F01N 3/021, F02N 11/08, F02D 41/02, F02D 41/08, F02D 41/04

(54) **DPF PROTECTION METHOD AND APPARATUS**
VERFAHREN UND VORRICHTUNG FÜR DPF-SCHUTZ
PROCÉDÉ ET APPAREIL DE PROTECTION DE DPF

(30) Priority: 29.09.2018 CN 201811144933
(43) Date of publication of application: 04.08.2021
(73) Proprietor: Weichai Power Co., Ltd., Weifang, Shandong 261061 (CN)
(72) Inventor: YAN, Libing, Weifang, Shandong 261061 (CN); WANG, Yupeng, Weifang, Shandong 261061 (CN); WANG, Jinping, Weifang, Shandong 261061 (CN); ZHANG, Juan, Weifang, Shandong 261061 (CN)
(74) Representative: Ipside
(86) International application number: PCT/CN2018/118451
(87) International publication number: WO 2020/062540

(56) References cited:
- JP-A- 2003 278 575
- US-A1- 2010 139 630
- US-A1- 2013 092 030

## Description

### FIELD

The present application relates to the technical field of vehicle engine control, and in particular to a DPF protection method and apparatus.

### BACKGROUND

During the parking regeneration process of a vehicle, the temperature of the DPF (Diesel Particle Filter) is high, and sufficient exhaust gas flow is required to take the heat away from the aftertreatment system. If the vehicle suddenly stops during the parking regeneration process, the exhaust gas flow may be reduced sharply, and the heat of the DPF cannot be dissipated, which may easily cause the temperature in the DPF to rise too fast and further damage the DPF. Moreover, the parking regeneration process is that the vehicle is at a standstill and the engine is at an idle speed, then the regeneration is turned on through a switch. At this time, the idle speed, which is low, of the engine is increased to ensure sufficient exhaust gas flow, and the exhaust tail pipe injects diesel to increase the temperature in the DPF.

Therefore, in the process of parking regeneration, how to protect the DPF when the vehicle stops suddenly is a problem to be solved by those skilled in the art.

### SUMMARY

In view of this, in order to solve the above problem, the present application provides a DPF protection method and apparatus, the technical solutions are as follows:

The present application provides a DPF protection method, the DPF protection method includes:
acquiring a switch control signal of an engine controller;
determining whether the engine controller needs to be powered off or not according to the switch control signal;
if yes, acquiring the temperature of DPF;
determining whether the temperature is lower than a preset temperature;
if yes, sending the switch control signal to the engine controller to stop the engine controller.

Preferably, the DPF protection method further includes:
if the engine controller needs to be powered off, sending an HC nozzle interruption signal to the engine controller to stop a HC nozzle from working.

Preferably, before acquiring the switch control signal of the engine controller, the DPF protection method further includes:
determining whether the vehicle suddenly stops in the parking regeneration process or not;
if yes, executing the step of acquiring the switch control signal of the engine controller.

Preferably, the DPF protection method further includes:
if the engine controller does not need to be powered off, returning to the step of determining whether the vehicle suddenly stops during the parking regeneration process or not.

Preferably, the DPF protection method further includes:
if the temperature is higher than or equal to the preset temperature, sending an alarm prompt information.

The present application further provides a DPF protection apparatus, and the DPF protection apparatus includes:
a first acquiring module for acquiring a switch control signal of an engine controller;
a first judging module for determining whether the engine controller needs to be powered off or not according to the switch control signal;
a second acquiring module for acquiring a temperature of DPF if the engine controller needs to be powered off;
a second judging module for determining whether the temperature is lower than a preset temperature;
a first control module for sending the switch control signal to the engine controller to stop the engine controller if the temperature is lower than a preset temperature.

Preferably, the DPF protection apparatus further includes a second control module; and
the second control module is configured to send an HC nozzle interruption signal to the engine controller if the engine controller needs to be powered off, so as to stop a HC nozzle from working.

Preferably, the DPF protection apparatus further includes a third judging module; and
the third judging module is configured to determine whether the vehicle suddenly stops in the parking regeneration process before acquiring the switch control signal of the engine controller; if yes, triggering the first acquiring module.

Preferably, the DPF protection apparatus further includes a third control module; and
the third control module is configured to trigger the third judging module if the engine controller does not need to be powered off.

Preferably, the DPF protection apparatus further includes an alarm module; and
the alarm module is configured to send an alarm prompt information if the temperature is higher than or equal to the preset temperature.

Compared with the prior art, the beneficial effects achieved by the present application are:
in the DPF protection method, that the engine controller needs to be powered off means that the vehicle suddenly stops during the parking regeneration process. In this case, the DPF protection method does not directly stop the engine controller, but determines whether the DPF temperature is lower than the preset temperature. Only if the temperature of DPF is lower than the preset temperature, the switch control signal is sent to the engine controller to stop the engine controller, thus delaying the time for the stop running of the engine controller and effectively achieving the purpose of protecting DPF.

### BRIEF DESCRIPTION OF THE DRAWINGS

For more clearly illustrating embodiments of the present application or technical solutions in the conventional technology, the drawing referred to for describing the embodiments or the conventional technology will be briefly described hereinafter. Apparently, the drawings in the following description are only some examples of the present application, and for those skilled in the art, other drawings may be obtained based on the provided drawings without any creative efforts.
Figure 1 is a schematic flow chart of a DPF protection method provided by an embodiment of the present application;
Figure 2 is a schematic flow chart of a DPF protection method provided by another embodiment of the present application;
Figure 3 is a schematic flow chart of a DPF protection method provided by another embodiment of the present application;
Figure 4 is a schematic flow chart of a DPF protection method provided by still another of the present application;
Figure 5 is a structural schematic diagram of a DPF protection apparatus provided by an embodiment of the present application;
Figure 6 is a structural schematic diagram of a DPF protection apparatus provided by another embodiment of the present application;
Figure 7 is a structural schematic diagram of a DPF protection apparatus provided by still another embodiment of the present application;
Figure 8 is a structural schematic diagram of a DPF protection apparatus provided by still another embodiment of the present application;
Figure 9 is a structural schematic diagram of a DPF protection apparatus provided by still another embodiment of the present application;

### DETAILED DESCRIPTION OF EMBODIMENTS

The technical solutions in the embodiments of the present application will be described clearly and completely hereinafter in conjunction with the drawings in the embodiments of the present application. The described embodiments are only a part of the embodiments of the present application, rather than all embodiments.

In order to make the above objectives, features and advantages of the present application more obvious and understandable, the present application will be described hereinafter in further detail in conjunction with the drawings and specific embodiments.

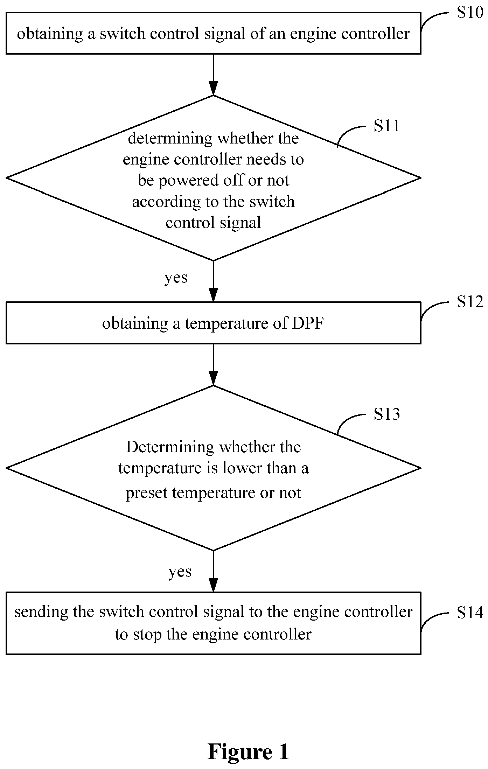

Referring to Figure 1, Figure 1 is a schematic flow chart of a DPF protection method provided by an embodiment of the present application, the DPF protection method includes:
S10: acquiring a switch control signal of an engine controller;
specifically, a switch control device is configured to control the engine controller in a running state or a stopped running state.
S11: determining whether the engine controller needs to be powered off or not according to the switch control signal;
S12: if yes, acquiring a temperature of DPF;
specifically, that the engine controller needs to be powered off indicates that the vehicle suddenly stops during a parking regeneration process,
S13: determining whether the temperature is lower than a preset temperature;
specifically, the preset temperature is a protection temperature of the DPF, and if the temperature of the DPF is higher than the preset temperature, the DPF may be damaged,
it should be noted that, the preset temperature may be determined according to specific conditions, and is not limited in the embodiment of the present application,
S14: if yes, sending the switch control signal to the engine controller to stop the engine controller;
specifically, only if the temperature of the DPF is lower than the preset temperature, the engine controller stops running to reduce the loss of the DPF.

According to the above description, in this embodiment, if the vehicle suddenly stops during the parking regeneration process, the DPF protection method does not directly stop the engine controller, but determines whether the temperature of DPF is lower than the preset temperature. Only if the temperature of DPF is lower than the preset temperature, the switch control signal is sent to the engine controller to stop the engine controller, thus delaying the time for the stop running of the engine controller and effectively achieving the purpose of protecting DPF.

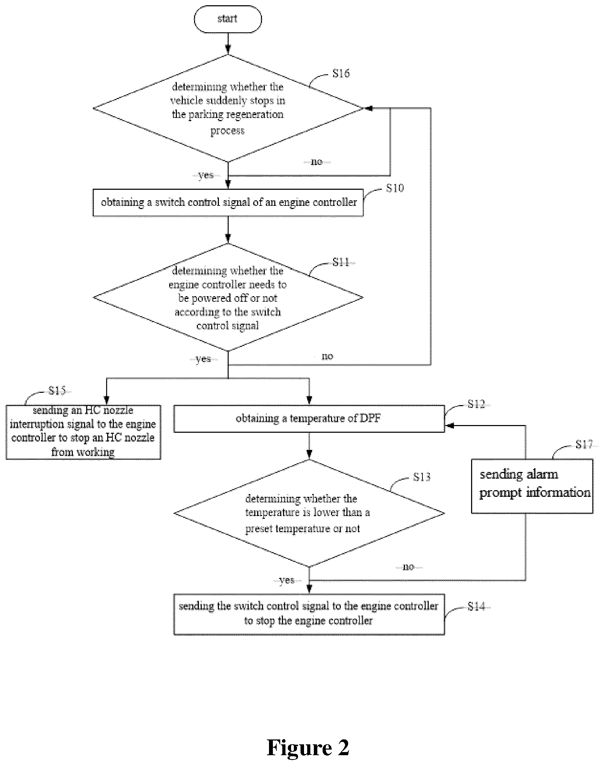

Based on the above embodiments of the present application, in another embodiment of the present application, referring to Figure 2, Figure 2 is a schematic flow chart of a DPF protection method provided by another embodiment of the present application. The DPF protection method further includes:
S 15: if the engine controller needs to be powered off, sending an HC nozzle interruption signal to the engine controller to stop a HC nozzle from working,
specifically, during the operation of the engine controller, the HC nozzle is in an exhaust tailpipe, and the temperature of DPF is increased by the injection of diesel oil, HC in the HC nozzle represents carbon and oxygen compounds.
therefore, if the engine controller needs to be powered off, send an HC nozzle interruption signal to the engine controller to stop the HC nozzle, so as to ensure the temperature of DPF to be lowered quickly.

According to the above description, in this embodiment, by controlling HC nozzle to stop working, the temperature of DPF can be quickly lowered, and the efficiency of the implementation of the DPF protection method is accelerated.

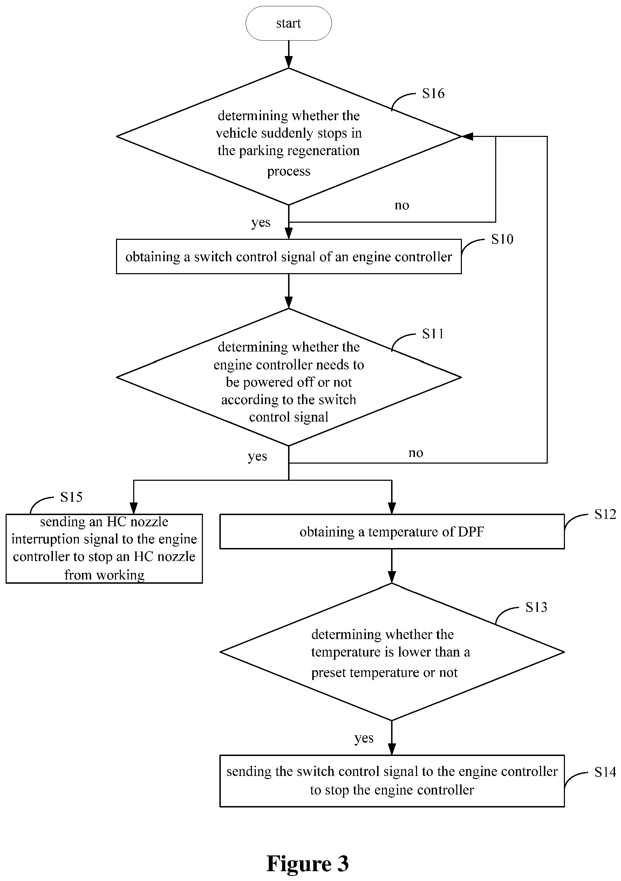

Based on the above embodiments of the present application, in another embodiment of the present application, referring to Figure 3, Figure 3 is a schematic flow chart of a DPF protection method provided by another embodiment of the present application; before executing S 10, the DPF protection method further includes:
S 16: determining whether the vehicle suddenly stops in the parking regeneration process;
if yes, executing S 10;
if no, executing S 16;
further, if the engine controller does not need to be powered off, return to execute S 16.

In this embodiment, that determining whether the vehicle suddenly stops in the parking regeneration process is a trigger condition for executing the subsequent steps of the DPF protection method. Therefore, if the engine controller does not need to be powered off, and the vehicle does not suddenly stop during the parking regeneration process, it is necessary to return to S 16 for re-determination, until the condition for the vehicle to stop suddenly during the parking regeneration process is met, the subsequent steps of the DPF protection method are continued.

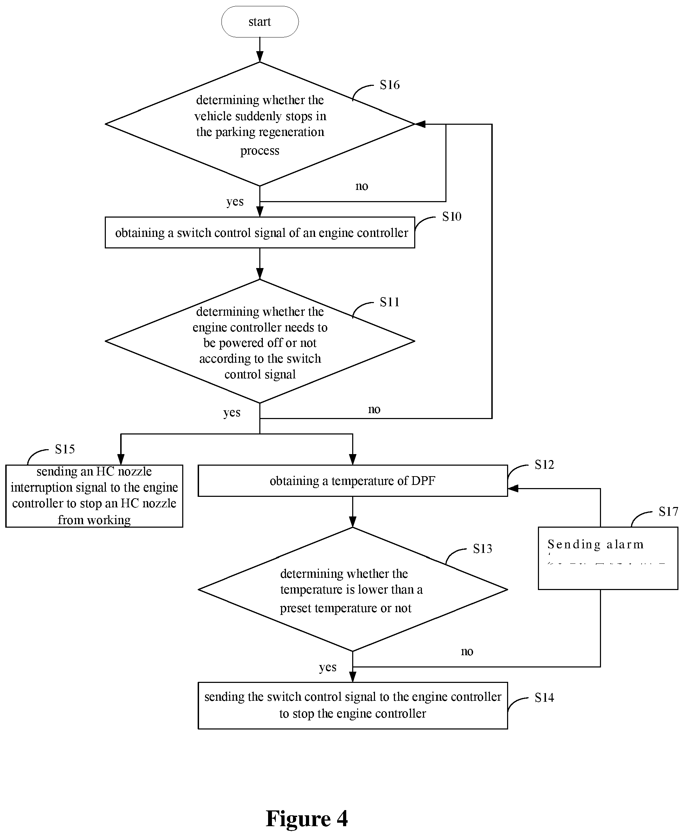

Based on the above embodiments of the present application, in another embodiment of the present application, referring to Figure 4, Figure 4 is still a schematic flow chart of a DPF protection method provided by another embodiment of the present application. The DPF protection method further includes:
S17: if the temperature information is higher than or equal to the preset temperature, sending alarm prompt information,
specifically, if the temperature information is higher than or equal to the preset temperature, a text alarm prompt information or a sound alarm prompt information or a light alarm prompt information is sent to a dashboard of the vehicle through a vehicle CAN signal to remind the driver that the current DPF is in the protection stage.

In this embodiment, by sending alarm prompt information, the driver is reminded that the DPF is in the protection stage at present, so as to prevent the driver from forcibly stopping the engine controller.

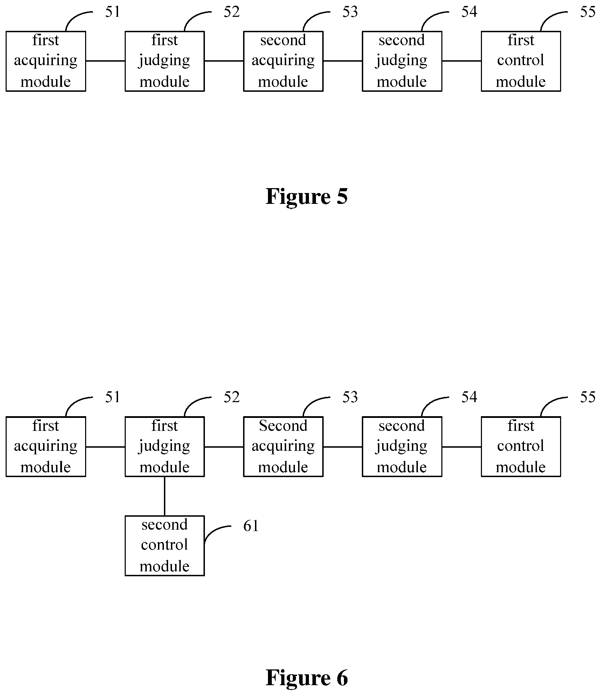

Based on the above embodiments of the present application, in another embodiment of the present application, a DPF protection apparatus is further provided. Referring to Figure 5, Figure 5 is a structural schematic diagram of a DPF protection apparatus provided by another embodiment of the present application. The DPF protection apparatus includes:
a first acquiring module 51 for acquiring the switch control signal of the engine controller;
specifically, a switch control signal device is configured to control the engine controller in a running state or a stopped running state,
a first judging module 52 for determining whether the engine controller needs to be powered off according to the switch control signal;
a second acquiring module 53 for acquiring temperature information of DPF if the engine controller needs to be powered off;
specifically, that the engine controller needs to be powered off indicates the vehicle suddenly stops during the parking regeneration process.
a second judging module 54 for determining whether the temperature is lower than the preset temperature;
specifically, the preset temperature is the protection temperature of the DPF, if the temperature of the DPF is higher than the preset temperature, the DPF may be damaged,
it should be noted that, the preset temperature may be determined according to specific conditions, and is not limited in the embodiment of the present application,
a first control module 55 for sending the switch control signal to the engine controller to stop the engine controller if the temperature information is lower than a preset temperature.
specifically, only if the temperature of the DPF is lower than the preset temperature, the engine controller stops running to reduce the loss of the DPF.

According to the above description, in this embodiment, if the vehicle suddenly stops during the parking regeneration process, the DPF protection apparatus does not directly stop the engine controller, but determines whether the temperature of DPF is lower than the preset temperature. Only if the temperature of DPF is lower than the preset temperature, the switch control signal is sent to the engine controller to stop the engine controller, thus delaying the time for the stop running of the engine controller and effectively achieving the purpose of protecting DPF.

Further, referring to Figure 6, Figure 6 is another structural schematic diagram of a DPF protection apparatus provided by an embodiment of the present application. The DPF protection apparatus further includes a second control module 61;
the second control module 61 is configured to send the HC nozzle interruption signal to the engine controller if the engine controller needs to be powered off, so as to stop the HC nozzle from working,
specifically, during the operation of the engine controller, the HC nozzle is in the exhaust tailpipe, and the temperature of DPF is increased by the injection of diesel oil, HC in the HC nozzle represents carbon and oxygen compounds,
therefore, if the engine controller needs to be powered off, the second control module 61 sends the HC nozzle interruption signal to the engine controller to stop the HC nozzle, so as to ensure the temperature of DPF to be lowered quickly.

According to the above description, in this embodiment, since the HC nozzle is controlled by the second control module 61 to stop working, the temperature of DPF can be quickly lowered, and the efficiency of the implementation of the DPF protection method is accelerated.

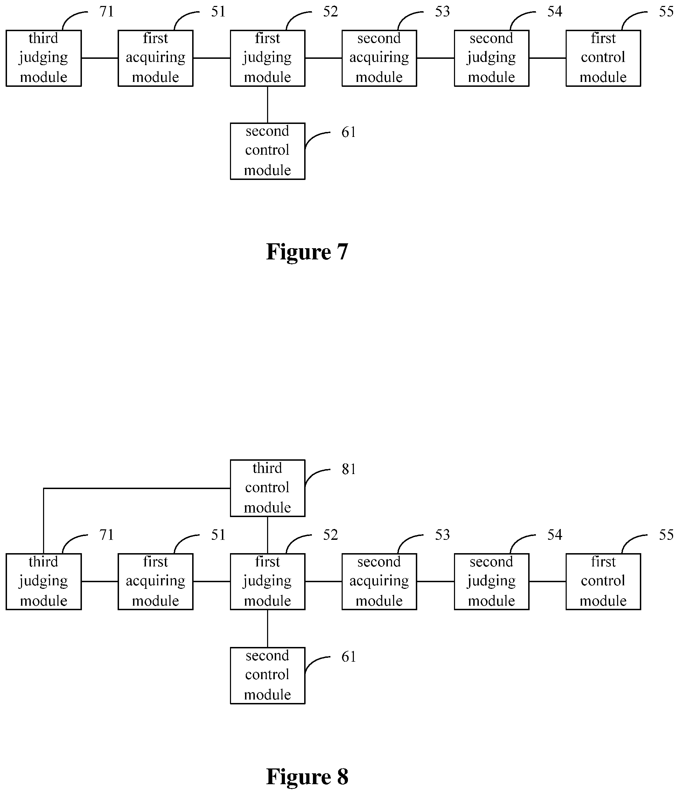

Further, referring to Figure 7, Figure 7 is a structural schematic diagram of a DPF protection apparatus provided by still another embodiment of the present application; the DPF protection apparatus further includes a third judging module 71;
the third judging module 71 is configured to judge whether the vehicle suddenly stops in the parking regeneration process before acquiring the switch control signal of the engine controller; if yes, triggering the first acquiring module 51.

In this embodiment, that determining whether the vehicle suddenly stops in the parking regeneration process is the trigger condition for executing the subsequent steps of the DPF protection method. Therefore, if the vehicle does not stop suddenly during the parking regeneration process, the third judging module 71 needs to be retriggered, and the first acquiring module 51 is not triggered until the condition of the vehicle suddenly stopping during the parking regeneration process is met.

Further, referring to Figure 8, Figure 8 is a structural schematic diagram of a DPF protection apparatus provided by still another embodiment of the present application. The DPF protection apparatus further includes a third control module 81, the third control module 81 for triggering the third judging module 71 if the engine controller does not need to be powered off.

Similarly, in this embodiment, that determining whether the vehicle suddenly stops in the parking regeneration process is the trigger condition for executing the subsequent steps of the DPF protection method. Therefore, if the engine controller does not need to be powered off, the third judging module 71 needs to be retriggered until the vehicle suddenly stops during the parking regeneration process, and then the first acquiring module 51 is triggered.

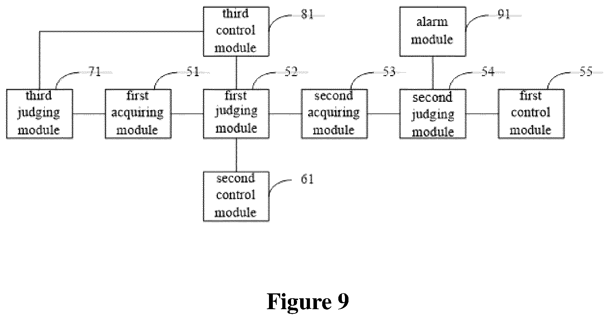

Further, referring to Figure 9, Figure 9 is a structural schematic diagram of a DPF protection apparatus provided by still another embodiment of the present application; the DPF protection apparatus further includes an alarm module 91,
the alarm module 91 is configured to send an alarm prompt information if the temperature information is higher than or equal to the preset temperature,
specifically, if the temperature information is higher than or equal to the preset temperature, a text alarm prompt information, a sound alarm prompt information or a light alarm prompt information is sent to the dashboard of the vehicle by the alarm module 91 through the vehicle CAN signal to remind the driver that the current DPF is in the protection stage.

In this embodiment, the alarm module 91 sends the alarm prompt information to remind the driver that the DPF is in the protection stage, so as to prevent the driver from forcibly stopping the engine controller.

According to the above description, when the vehicle suddenly stops during the parking regeneration process, the DPF protection method and apparatus does not directly stop the engine controller, but determines whether the temperature of DPF is lower than the preset temperature. Only if the temperature of DPF is lower than the preset temperature, the switch control signal is sent to the engine controller to stop the engine controller, thus delaying the time for the stop running of the engine controller and effectively achieving the purpose of protecting DPF.

## Claims

1. A DPF protection method, comprising:
S10: acquiring a switch control signal of an engine controller;
S11: determining whether the engine controller needs to be powered off or not according to the switch control signal;
S12: if yes, acquiring a temperature of DPF;
S13: determining whether the temperature is lower than a preset temperature being a protection temperature of the DPF;
S14: if yes, sending the switch control signal to the engine controller to stop the engine controller.

2. The DPF protection method according to claim 1, further comprising:
S15: if the engine controller needs to be powered off, sending an HC nozzle interruption signal to the engine controller to stop an HC nozzle from working, and the HC nozzle is in an exhaust tailpipe and increases the temperature of the DPF by injection of HCs.

3. The DPF protection method according to claim 1, wherein before acquiring the switch control signal of the engine controller, the DPF protection method further comprises:
S16: determining whether the vehicle suddenly stops in a parking regeneration process in which the vehicle is at standstill and the engine is at idle speed;
if yes, executing the step S10 of acquiring the switch control signal of the engine controller.

4. The DPF protection method according to claim 3, further comprising:
if the engine controller does not need to be powered off, returning to the step S16 of determining whether the vehicle suddenly stops during the parking regeneration process.

5. The DPF protection method according to claim 1, further comprising:
S17: if the temperature information is higher than or equal to the preset temperature, sending an alarm prompt information.

6. A DPF protection apparatus in combination with an engine and its engine controller, comprising:
a first acquiring module (51) for acquiring a switch control signal of an engine controller;
a first judging module (52) for determining whether the engine controller needs to be powered off or not according to the switch control signal;
a second acquiring module (53) for acquiring a temperature of DPF if the engine controller needs to be powered off;
a second judging module (54) for judging whether the temperature is lower than a preset temperature being a protection temperature of the DPF;
a first control module (55) for sending the switch control signal to the engine controller to stop the engine controller if the temperature information is lower than the preset temperature.

7. The DPF protection apparatus according to claim 6, further comprising a second control module (61);
wherein the second control module (61) is configured to send an HC nozzle interruption signal to the engine controller if the engine controller needs to be powered off, so as to stop the HC nozzle from working, and the HC nozzle is in an exhaust tailpipe and increases the temperature of the DPF by injection of HCs.

8. A vehicle including a DPF protection apparatus and an engine with its engine controller according to claim 6, further comprising a third judging module (71);
wherein the third judging module (71) is configured to judge whether the vehicle suddenly stops in a parking regeneration process in which the vehicle is at standstill and the engine is at idle speed before acquiring the switch control signal of the engine controller; if yes, triggering the first acquiring module (51).

9. The vehicle according to claim 8, further comprising a third control module (81);
wherein the third control module (81) is configured to trigger the third judging module if the engine controller does not need to be powered off.

10. The DPF protection apparatus according to claim 6, further comprising an alarm module (91),
wherein the alarm module (91) is configured to send an alarm prompt information if the temperature information is higher than or equal to the preset temperature.

## Patentansprüche

1. DPF-Schutzverfahren, umfassend:
S10: Erfassen eines Schaltersteuersignal einer Motorsteuerung;
S11: Bestimmen, ob die Motorsteuerung gemäß dem Schaltersteuersignal ausgeschaltet werden muss oder nicht;
S12: wenn ja, Erfassen einer Temperatur des DPF;
S13: Bestimmen, ob die Temperatur geringer ist als eine vorgegebene Temperatur, die eine Schutztemperatur des DPF ist;
S14: wenn ja, Senden des Schaltersteuersignals an die Motorsteuerung, um die Motorsteuerung anzuhalten.

2. DPF-Schutzverfahren nach Anspruch 1, ferner umfassend:
S15: wenn die Motorsteuerung ausgeschaltet werden muss, Senden eines HC-Düsenunterbrechungssignals an die Motorsteuerung, um den Betrieb einer HC-Düse anzuhalten, und wobei die HC-Düse ein Abgasendrohr ist und die Temperatur des DPF durch das Einspritzen von HC ansteigt.

3. DPF-Schutzverfahren nach Anspruch 1, wobei das DPF-Schutzverfahren vor dem Erfassen des Schaltersteuersignals der Motorsteuerung ferner Folgendes umfasst:
S16: Bestimmen, ob das Fahrzeug plötzlich in einem Parkprozess zur Regeneration anhält, in dem sich das Fahrzeug im Stillstand befindet und der Motor im Leerlauf ist;
wenn ja, Ausführen des Schritts S10 des Erfassens des Schaltersteuersignals der Motorsteuerung.

4. DPF-Schutzverfahren nach Anspruch 3, ferner umfassend: wenn die Motorsteuerung nicht ausgeschaltet werden muss, Zurückkehren zu Schritt S16 des Bestimmens, ob das Fahrzeug plötzlich während des Parkprozesses zur Regeneration anhält.

5. DPF-Schutzverfahren nach Anspruch 1, ferner umfassend: S17: wenn die Temperaturinformation höher als oder gleich der vorgegebenen Temperatur ist, Senden einer Alarmaufforderungsinformation.

6. DPF-Schutzvorrichtung in Kombination mit einem Motor und dessen Motorsteuerung, umfassend:
ein erstes Erfassungsmodul (51) zum Erfassen eines Schaltersteuersignals einer Motorsteuerung;
ein erstes Beurteilungsmodul (52) zum Bestimmen, ob die Motorsteuerung gemäß dem Schaltersteuersignal ausgeschaltet werden muss oder nicht;
ein zweites Erfassungsmodul (53) zum Erfassen einer Temperatur des DPF, wenn die Motorsteuerung ausgeschaltet werden muss;
ein zweites Beurteilungsmodul (54) zum Beurteilen, ob die Temperatur geringer ist als eine vorgegebene Temperatur, die eine Schutztemperatur des DPF ist;
ein erstes Steuermodul (55) zum Senden des Schaltersteuersignals an die Motorsteuerung, um die Motorsteuerung anzuhalten, wenn die Temperaturinformation geringer ist als die vorgegebene Temperatur.

7. DPF-Schutzvorrichtung nach Anspruch 6, ferner umfassend ein zweites Steuermodul (61);
wobei das zweite Steuermodul (61) dazu konfiguriert ist, ein HC-Düsenunterbrechungssignal an die Motorsteuerung zu senden, wenn die Motorsteuerung ausgeschaltet werden muss, um so den Betrieb der HC-Düse anzuhalten, und wobei die HC-Düse ein Abgasendrohr ist und die Temperatur des DPF durch das Einspritzen von HC ansteigt.

8. Fahrzeug, das eine DPF-Schutzvorrichtung und einen Motor mit seiner Motorsteuerung nach Anspruch 6 enthält, ferner umfassend ein drittes Beurteilungsmodul (71); wobei das dritte Beurteilungsmodul (71) dazu konfiguriert ist, zu beurteilen, ob das Fahrzeug plötzlich einem Parkprozess zur Regeneration anhält, in dem sich das Fahrzeug im Stillstand befindet und der Motor im Leerlauf ist, vor dem Erfassen des Schaltersteuersignals der Motorsteuerung; wenn ja, Auslösen des ersten Erfassungsmodul (51).

9. Fahrzeug nach Anspruch 8, ferner umfassend ein drittes Steuermodul (81);
wobei das dritte Steuermodul (81) dazu konfiguriert ist, das dritte Beurteilungsmodul auszulösen, wenn die Motorsteuerung nicht ausgeschaltet werden muss.

10. DPF-Schutzvorrichtung nach Anspruch 6, ferner umfassend ein Alarmmodul (91),
wobei das Alarmmodul (91) dazu konfiguriert ist, eine Alarmaufforderungsinformation zu senden, wenn die Temperaturinformation höher als oder gleich der vorgegebenen Temperatur ist.

## Revendications

1. Procédé de protection de DPF, comprenant :
S10 : l'acquisition d'un signal de commande de commutation d'un dispositif de commande de moteur ;
S11 : la détermination si le dispositif de commande de moteur doit ou non être mis hors tension selon le signal de commande de commutation ;
S12 : si tel est le cas, l'acquisition d'une température de DPF ;
S13 : la détermination si la température est ou non inférieure à une température préréglée étant une température de protection du DPF ;
S14 : si tel est le cas, l'envoi du signal de commande de commutation au dispositif de commande de moteur pour arrêter le dispositif de commande de moteur.

2. Procédé de protection de DPF selon la revendication 1, comprenant en outre :
S15 : si le dispositif de commande de moteur doit être mis hors tension, l'envoi d'un signal d'interruption de buse de HC au dispositif de commande de moteur pour arrêter le fonctionnement d'une buse de HC, et la buse de HC est dans un tuyau d'échappement et augmente la température du DPF par l'injection de HC.

3. Procédé de protection de DPF selon la revendication 1, dans lequel, avant l'acquisition du signal de commande de commutation du dispositif de commande de moteur, le procédé de protection de DPF comprend en outre :
S16 : la détermination si le véhicule s'arrête soudainement ou non dans un processus de régénération en stationnement dans lequel le véhicule est immobile et le moteur est au régime de ralenti ;
si tel est le cas, l'exécution de l'étape S10 de l'acquisition du signal de commande de commutation du dispositif de commande de moteur.

4. Procédé de protection de DPF selon la revendication 3, comprenant en outre :
si le dispositif de commande de moteur ne doit pas être mis hors tension, le retour à l'étape S16 de la détermination si le véhicule s'arrête soudainement au cours du processus de régénération en stationnement.

5. Procédé de protection de DPF selon la revendication 1, comprenant en outre :
S17 : si l'information de température est supérieure ou égale à la température préréglée, l'envoi d'une information d'invite d'alarme.

6. Appareil de protection de DPF en combinaison avec un moteur et son dispositif de commande de moteur, comprenant :
un premier module d'acquisition (51) pour l'acquisition d'un signal de commande de commutation d'un dispositif de commande de moteur ;
un premier module de jugement (52) pour le jugement si le dispositif de commande de moteur doit ou non être mis hors tension selon le signal de commande de commutation ; un deuxième module d'acquisition (53) pour l'acquisition d'une température de DPF si le dispositif de commande de moteur doit être mis hors tension ;
un deuxième module de jugement (54) pour le jugement si la température est ou non inférieure à une température préréglée étant une température de protection du DPF ;
un premier module de commande (55) pour l'envoi du signal de commande de commutation au dispositif de commande de moteur pour arrêter le dispositif de commande de moteur si l'information de température est inférieure à la température préréglée.

7. Appareil de protection de DPF selon la revendication 6, comprenant en outre un deuxième module de commande (61) ; dans lequel le deuxième module de commande (61) est configuré pour envoyer un signal d'interruption de buse de HC au dispositif de commande de moteur si le dispositif de commande de moteur doit être mis hors tension, afin d'arrêter le fonctionnement de la buse de HC, et la buse de HC est dans un tuyau d'échappement et augmente la température du DPF par l'injection de HC.

8. Véhicule comprenant un appareil de protection de DPF et un moteur avec son dispositif de commande de moteur selon la revendication 6, comprenant en outre un troisième module de jugement (71) ;
dans lequel le troisième module de jugement (71) est configuré pour juger si le véhicule s'arrête soudainement ou non dans un processus de régénération en stationnement dans lequel le véhicule est immobile et le moteur est au régime de ralenti avant l'acquisition du signal de commande de commutation du dispositif de commande de moteur ; si tel est le cas, le déclenchement du premier module d'acquisition (51).

9. Véhicule selon la revendication 8, comprenant en outre un troisième module de commande (81) ;
dans lequel le troisième module de commande (81) est configuré pour déclencher le troisième module de jugement si le dispositif de commande de moteur ne doit pas être mis hors tension.

10. Appareil de protection de DPF selon la revendication 6, comprenant en outre un module d'alarme (91),
dans lequel le module d'alarme (91) est configuré pour envoyer une information d'invite d'alarme si l'information de température est supérieure ou égale à la température préréglée.
